# EUROPEAN PATENT APPLICATION

(11) **EP 4 212 482 A1**
(43) Date of publication of application: **19.07.2023**
(21) Application number: 21866664.2
(22) Date of filing: 03.09.2021
(51) Int. Cl.: C01G 53/00, H01M 4/13, H01M 4/36, H01M 4/62, H01M 10/052, H01M 10/0562

(54) **ACTIVE MATERIAL AND METHOD FOR PRODUCING SAME, ELECTRODE MIXTURE, AND BATTERY**

(30) Priority: 11.09.2020 JP 2020153109
(71) Applicant: Mitsui Mining & Smelting Co., Ltd., Shinagawa-ku Tokyo 141-8584 (JP)
(72) Inventor: KAI, Takuya, Ageo-shi, Saitama 362-0021 (JP); MAEDA, Tomoyuki, Ageo-shi, Saitama 362-0021 (JP); SOMA, Kentaro, Ageo-shi, Saitama 362-0021 (JP)
(74) Representative: Novagraaf Technologies
(86) International application number: PCT/JP2021/032403
(87) International publication number: WO 2022/054705

(57) **Abstract**

An active material of the present invention has: a core portion made of an active material base material; and a coating portion located on a surface of the core portion. The coating portion contains an element A comprising at least one selected from the group consisting of titanium (Ti), zirconium (Zr), tantalum (Ta), niobium (Nb), and aluminum (Al). The active material has two or more inflection point in a first-order derivative obtained with respect to a peak attributed to the element A, the first-order derivative being obtained based on a constituent element average intensity profile measured for the coating portion with use of an energy dispersive X-ray spectrometer.

## Description

### Technical Field

The present invention relates to an active material and a method for producing the same. Also, the present invention relates to an electrode material mixture and a battery that contain the active material.

### Background Art

Lithium ion batteries are widely used as power sources for portable electronic devices such as notebook computers and cellular phones because of their high energy density and ease of size and weight reductions. Also, high-power, high-capacity lithium ion batteries for use in electric automobiles, hybrid electric automobiles, and the like have recently been under development.

Many lithium ion batteries use electrolytic solutions that contain flammable organic solvents. On the other hand, solid-state batteries that use solid electrolytes instead of electrolytic solutions have recently been proposed. Solid-state batteries are expected to be put to practical use as batteries that are safe and have high energy densities.

Solid-state batteries have a problem in that the resistance at the interface between a positive electrode active material and a solid electrolyte increases, leading to a degradation in battery characteristics. To address this problem, a technology that forms a coating layer on the surface of the positive electrode active material has been proposed as in Patent Literature 1, for example.

### Citation List

### Patent Literature

Patent Literature 1: US 2013/209890A

### Summary of Invention

Conventionally, various studies have been conducted on active materials. However, with the current demand for further developments in battery performance, there is a demand for an active material with which better battery performance can be obtained.

In view of the above-described problem, it is a main object of the present invention to provide an active material with which good battery performance can be obtained.

The present invention solved the above-described problem by providing an active material comprising:
a core portion made of an active material base material; and
a coating portion located on a surface of the core portion,
wherein the coating portion contains an element A comprising at least one selected from the group consisting of titanium (Ti), zirconium (Zr), tantalum (Ta), niobium (Nb), and aluminum (Al), and
the active material has two or more inflection points in a first-order derivative obtained with respect to a peak attributed to the element A, the first-order derivative being obtained based on a constituent element average intensity profile measured for the coating portion with use of an energy dispersive X-ray spectrometer.

Also, the present disclosure provides a method for producing an active material having: a core portion made of an active material base material; and a coating portion located on a surface of the core portion,
the method comprising:
a preparing step of preparing a dispersion liquid in which a powder constituting the core portion is dispersed in a liquid containing water; and
a mixing step of mixing an aqueous solution containing lithium (Li) element and an element A with the dispersion liquid, the element A comprising at least one selected from the group consisting of titanium (Ti), zirconium (Zr), tantalum (Ta), niobium (Nb), and aluminum (Al).

### Brief Description of Drawings

[Fig. 1] Fig. 1 is an electron microscope image showing locations where average intensity profiles of Mn and Nb measured for an active material of Example 1 with use of an energy dispersive X-ray spectrometer were obtained, with the obtained profiles being shown superimposed on the electron microscope image.
[Fig. 2] Fig. 2(a) shows the average intensity profiles of Mn and Nb measured for the active material of Example 1 with use of the energy dispersive X-ray spectrometer, and Fig. 2(b) shows first-order derivatives of the average intensity profiles in Fig. 2(a).
[Fig. 3] Fig. 3(a) shows average intensity profiles of Mn and Nb measured for an active material of Comparative Example 1 with use of an energy dispersive X-ray spectrometer, and Fig. 3(b) shows first-order derivatives of the average intensity profiles in Fig. 3(a).

### Description of Embodiments

Hereinafter, the present invention will be described based on preferred embodiments thereof.

The present invention relates to an active material for a battery, for example, an active material for a lithium ion battery, and a method for producing the active material. An active material of the present invention has a core portion and a coating portion located on the surface of the core portion. The core portion is a portion that occupies most of the active material, and is composed of an active material base material. As a result of the coating portion being present on the surface of the core portion, the formation of a high-resistance layer between the core portion and an electrolyte caused by contact therebetween, for example, can be suppressed. The formation of a high-resistance layer is one of the causes of a degradation in battery performance. The coating portion according to the present invention contains an element A. The element A is at least one of titanium (Ti), zirconium (Zr), tantalum (Ta), niobium (Nb), and aluminum (Al). Preferably, the element A is at least one of titanium (Ti), zirconium (Zr), and niobium (Nb), because in this case the formation of a high-resistance layer can be more effectively suppressed.

It is known that the above-described high-resistance layer is formed when there is a large difference between the chemical potential of the active material and the chemical potential of the electrolyte ("Development of All-Solid-State Secondary Batteries", Science & Technology Co., Ltd., June 29, 2007, pp. 198-210). All of the above-listed elements A have a common feature of having the function of reducing the difference between the chemical potential of the active material and the chemical potential of the electrolyte and thereby suppressing the formation of a high-resistance layer therebetween. The element A belongs to a group of elements called valve metals.

According to the present invention, as a result of the active material having a predetermined coating portion, the formation of a high-resistance layer can be suppressed, and the resistance can thus be reduced. Specifically, the reduction in resistance can be achieved by controlling the distribution of the element A contained in the coating portion of the active material of the present invention.

More specifically, the active material of the present invention is measured using an energy dispersive X-ray spectrometer to thereby obtain average intensity profiles of constituent elements of the coating portion of the active material. The inventors of the present invention found that, among the obtained average intensity profiles, if a peak attributed to the element A, that is, the average intensity profile attributed to the element A has a specific shape, the resistance can be reduced. The above-described average intensity profile having a specific shape means that, when a first-order derivative of the average intensity profile attributed to the element A is obtained, the first-order derivative has a shape with two or more inflection points.

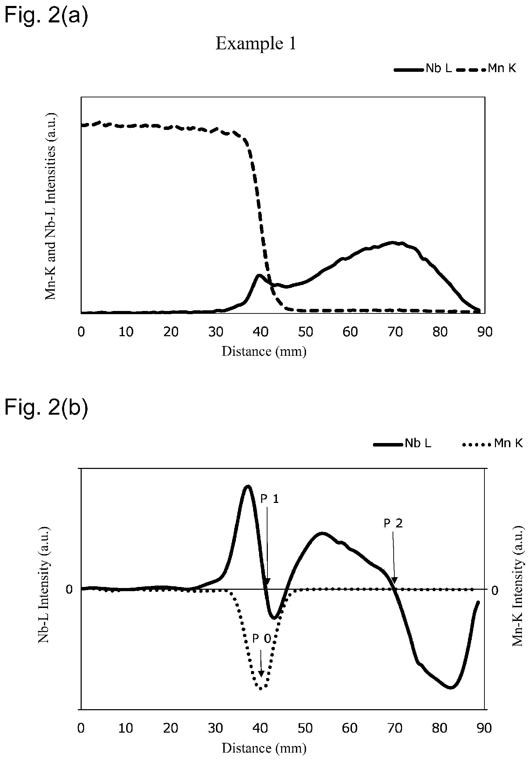

If the average intensity profile attributed to the element A is an average intensity profile shown in Fig. 2(a), for example, the first-order derivative of that average intensity profile is as shown in Fig. 2(b). The first-order derivative shown in Fig. 2(b) has inflection points at positions indicated by reference numerals P1 and P2, respectively. Therefore, the active material exhibiting the average intensity profile having the first-order derivative shown in Fig. 2(b) is regarded as the active material of the present invention. Note that, in Figs. 2(a) and 2(b), the horizontal axis represents the distance in the core portion and the coating portion, and the vertical axis represents the average intensities of the element A and an element M, which is a component of the active material. The boundary between the core portion and the coating portion is defined as an origin (P0). In addition, here, a point, in the first-order derivative, at which the average intensity of the element A changes from positive to negative and at which the value of the average intensity of the element A of the first-order derivative is 0 is referred to as an inflection point.

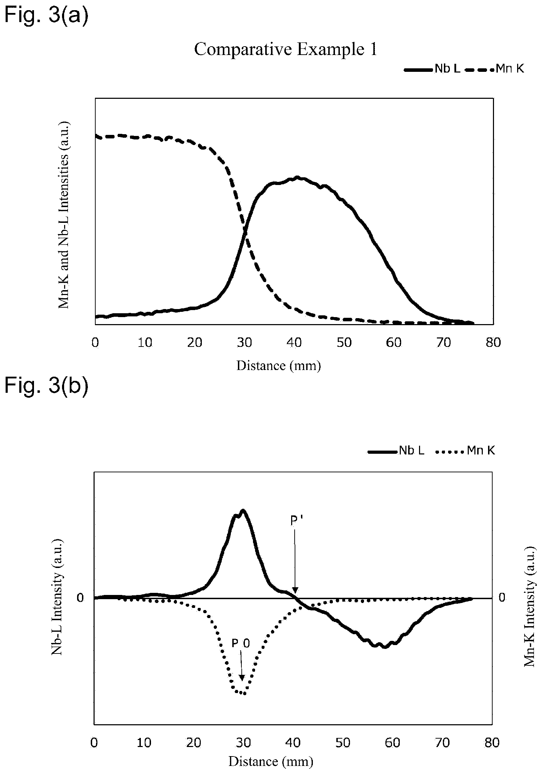

On the other hand, if the average intensity profile attributed to the element A is an average intensity profile shown in Fig. 3(a), for example, the first-order derivative of that average intensity profile is as shown in Fig. 3(b). The first-order derivative shown in Fig. 3(b) has only a single inflection point P' in a positive value region relative to the origin P0. Therefore, an active material exhibiting the average intensity profile having the first-order derivative shown in Fig. 3(b) corresponds to a comparative example.

According to the active material of the present invention, in which two or more inflection points are present in the first-order derivative of the average intensity profile attributed to the element A, the formation of a high-resistance layer is suppressed by the coating portion, and also the provision itself of the coating portion is unlikely to cause any inconvenience. Consequently, the interfacial resistance between the active material of the present invention and an electrolyte is reduced. Furthermore, a battery containing the active material of the present invention has excellent rate characteristics, and, as for the other battery characteristics, improvements in performance can also be expected.

In order to obtain the first-order derivative of the average intensity profile attributed to the element A, the average intensity profile can be numerically differentiated using a computer.

Incidentally, depending on the shape of the average intensity profile, it may be difficult to specify an inflection point in the calculated first-order derivative. In that case, the presence or absence of an inflection point and the number of inflection points can be determined by performing the operations of taking a moving average of the obtained average intensity profile, applying an FIR filter, and calculating a first-order derivative with respect to the thus calculated average intensity profile.

As the sample size of the moving average, for example, it is preferable to use a sample size that enables smoothing without causing a significant deviation from the shape of the original profile, and, specifically, it is preferable to use a sample size that enables smoothing the first-order derivative to such an extent that noise components can be removed. The sample size of the moving average is preferably 3 or more, for example. On the other hand, the sample size of the moving average is, for example, preferably 15 or less, more preferably 11 or less, and even more preferably 9 or less. In the present invention, the sample size of the moving average is most preferably 5. In Examples, which will be described later, a sample size of 5 is used. The conditions set for the FIR filter will be described later in Examples.

When the coating portion contains a single element A, the first-order derivative is obtained based on an average intensity profile attributed to that element A. On the other hand, when the coating portion contains a plurality of, or in other words, two or more elements A, the first-order derivative is obtained based on an average intensity profile attributed to an element A that has the highest abundance (by mole), of the plurality of elements A.

In the average intensity profiles and the first-order derivatives thereof shown in Figs. 2(a), 2(b), 3(a), and 3(b), the origin (P0) that is set at the boundary between the core portion and the coating portion is determined in the following manner.

In addition to the element A, an element M is also used as an element to be measured to obtain an average intensity profile. The element M is an element contained in the core portion of the active material of the present invention and is different from the element A contained in the coating portion. When a plurality of, or in other words, two or more elements M that meet this definition are present, an element M that has the highest abundance (by mole), of the plurality of elements M is preferably used. The average intensity profiles are measured for both of the elements A and M, and the first-order derivatives thereof are obtained. Then, the position at which the first-order derivative of the element M takes a minimal value is defined as the origin, that is, the boundary between the core portion and the coating portion.

As described above, a first-order derivative such as that shown in Fig. 2(b) is obtained based on an average intensity profile of the element A measured for the active material of the present invention. When at least inflection points P1 and P2 are present in the obtained first-order derivative in this order from the origin P0 along the thickness direction of the coating portion, it is preferable that the position of the inflection point P1 that is closer to the origin P0 is observed within 10 nm from the origin in the thickness direction of the coating portion, from the viewpoint of reducing the interfacial resistance between the active material and the electrolyte. It is more preferable that the inflection point P1 is observed within 5 nm or less from the origin, and even more preferably within 3 nm or less from the origin. When the position of P1 is within the above-described range, the interfacial resistance between the active material and the electrolyte is advantageously reduced even further.

In the active material of the present invention, if at least two inflection points that satisfy the above-described requirements are observed, the intended effect is achieved. However, in the active material of the present invention, three or more inflection points that satisfy the above-described requirements may be observed. In the case where three or more inflection points are observed, an inflection point that is observed at the position that is closest to the origin P0 corresponds to the above-described inflection point P1. An inflection point that is observed at the position that is second closest to the origin P0 corresponds to the above-described inflection point P2. In order to make the effect of the present invention especially pronounced, it is preferable that the active material of the present invention has only two inflection points that satisfy the above-described requirements.

The coating portion of the present invention may contain other elements in addition to the element A. Examples of the other elements include lithium (Li) element and oxygen (O) element. As a result of the coating portion containing these elements, the active material of the present invention is suitable as an active material, in particular, a positive electrode active material, for lithium ion batteries.

In the case where the coating portion of the active material of the present invention contains the element A, lithium (Li) element, and oxygen (O) element, the coating portion preferably contains an oxide containing these elements. Hereinafter, this oxide is referred to as a "LiAO compound" for the sake of convenience. In the active material of the present invention, preferably the surface of the core portion is coated with the coating portion that contains the LiAO compound. A state in which "the surface of the core portion is coated with the LiAO compound" encompasses, for example, a form in which the LiAO compound is present as particles on the surface of the core portion, a form in which the LiAO compound is present as aggregate particles that are formed through aggregation of particles, and a form in which the LiAO compound is present while forming a layer. The wording "is present while forming a layer" means a state in which the LiAO compound is present extending in a plane direction with a certain thickness, and also encompasses a case in which the LiAO compound is present in the form of islands.

Preferably, the thickness of the coating portion is adjusted so as to be within a predetermined range. The coating portion tends to have low electronic conductivity, and therefore, if the coating portion is formed excessively thick, the coating portion itself may constitute a resistance. On the other hand, if the coating portion is formed excessively thin, the effect of the coating portion may not be sufficiently achieved. The thickness of the coating portion is, for example, preferably 1 nm or greater, more preferably 5 nm or greater, and even more preferably 10 nm or greater. On the other hand, the thickness of the coating portion is, for example, preferably 100 nm or less, more preferably 50 nm or less, and even more preferably 30 nm or less. When the thickness of the coating portion is within the above-described range, the interfacial resistance is reduced even further, and the coating portion can function as a favorable lithium ion conducting layer. Note that the thickness of the coating portion may or may not be uniform. The thickness of the coating portion can be measured, for example, using a scanning transmission electron microscope (STEM). When necessary, the thickness of the coating portion can also be measured by performing analysis using energy dispersive X-ray spectroscopy (EDS) in combination with the scanning transmission electron microscope (STEM).

The coating portion containing the LiAO compound may not be present in a portion or portions of the surface of the core portion. The coating ratio of the coating portion relative to the entire surface of the core portion is, for example, preferably 60% or greater, more preferably 70% or greater, even more preferably 80% or greater, and yet even more preferably 90% or greater. The coating ratio of the coating portion can be confirmed, for example, by a method in which the surface of the active material is observed using a scanning transmission electron microscope (STEM), in combination with energy dispersive X-ray spectroscopy (EDS) when necessary, or by Auger electron spectroscopy.

The composition of the elements contained in the LiAO compound can be represented by LiₓAO_{y}, for example. In this formula, x and y can take any values within ranges based on the valences of the elements. Among others, a composition (x ≥ 1) in which at least 1 mol of Li is contained per mole of the element A is preferable, and a composition (x > 1) in which Li is contained in excess of 1 mol per mole of the element A is more preferable. With this composition, the formation of a compound of A and O can be suppressed, and the interfacial resistance can thus be effectively reduced.

When the LiAO compound is represented by LiₓAO_{y}, in order to satisfy x > 1, a method may be used in which, in a step of forming the coating portion, the amount of lithium raw material added relative to that of element A raw material is set to exceed the amount in a stoichiometric composition ratio of a composition, for example, LiAOs, that is expected to be produced. In this case, simply adding Li in an excess amount tends to conversely degrade the rate characteristics and the cycle characteristics of the battery. For this reason, it is preferable that, with consideration given to the formation of lithium carbonate, which is an undesirable compound, the amounts of element A raw material and lithium raw material added are adjusted so that LiₓAO_{y} satisfies a predetermined composition.

From the viewpoint of effectively reducing the interfacial resistance, the ratio of the element A in the active material of the present invention is preferably from 0.2 to 6.0 mass%, more preferably from 0.4 to 5.0 mass%, and even more preferably from 0.6 to 4.0 mass%. The ratio of the element A can be measured using various elemental analysis methods such as ICP emission spectroscopy.

There is no particular limitation on the material of the core portion of the present invention as long as the material has the function of an active material. The core portion may contain, for example, a lithium metal complex oxide. Known lithium metal complex oxides can be used as the lithium metal complex oxide. For example, the lithium metal complex oxide may be one, or a combination of two or more, of a lithium-containing complex oxide having a layered rock salt-type structure and being represented by the general formula LiMO₂, where M is a metal element, a lithium-containing complex oxide having a spinel-type structure and being represented by the general formula LiM₂O₄, and a lithium-containing complex oxide having an olivine structure and being represented by the general formula LiMPO₄, where M is a metal element, or LiMSiO₄, where M is a metal element. However, the lithium metal complex oxide is not limited to these compounds.

It is preferable that the core portion is constituted by particles made of a spinel-type complex oxide containing Li, Mn, and O, as well as one or more, or preferably two or more, elements other than these elements (hereinafter, this core portion will also be referred to as the "core portion A"). In the case where the active material of the present invention containing the core portion A is used as a positive electrode active material, the positive electrode active material has a working potential of 4.5 V or greater against a metallic Li reference potential. The wording "having a working potential of 4.5 V or greater against a metallic Li reference potential" does not necessarily mean "having only a working potential of 4.5 V or greater as a plateau region", but also encompasses "partially having a working potential of at least 4.5 V". Accordingly, the present invention is not limited to a positive electrode active material composed entirely of a 5 V class positive electrode active material that has a working potential of at least 4.5 V as a plateau region. For example, the active material of the present invention may also include a positive electrode active material that has a working potential of less than 4.5 V as a plateau region. Specifically, the active material of the present invention may be used as a positive electrode active material in which the aforementioned 5 V class positive electrode active material preferably accounts for 30 mass% or greater, more preferably 50 mass% or greater, and even more preferably 80 mass% or greater (including 100 mass%).

As described above, the core portion A is preferably constituted by particles made of a spinel-type complex oxide containing Li, Mn, and O, as well as two or more elements other than these elements. At least one element of the "two or more other elements" is preferably an element M¹ that is one element, or a combination of two or more elements, selected from the group consisting of Ni, Co, and Fe. The element M¹ is a substituent element that mainly contributes to realization of a working potential of at least 4.5 V against a metallic Li reference potential. Another element is preferably an element M² that is one element, or a combination of two or more elements, selected from the group consisting of Na, Mg, Al, P, K, Ca, Ti, V, Cr, Fe, Co, Cu, Ga, Y, Zr, Nb, Mo, In, Ta, W, Re, and Ce. The element M² is a substituent element that mainly contributes to stabilization of the crystal structure and thus improvement in the characteristics. As a result of the element M² being selected from the above-listed elements, the capacity retention rate can be improved. The elements M¹ and M² contained in the structure are different elemental species.

A preferred example of the composition of the core portion A is a composition that contains a spinel-type lithium manganese-containing complex oxide having a crystal structure in which some of the Mn sites in LiMn₂O_{4-δ} are replaced by Li, the element M¹, and the other element M². Other examples include spinel-type lithium manganese-containing complex oxides represented by the formula (1): Liₓ(M¹_{y}M²_{z}Mn_{2-x-y-z})O_{4-δ} or the formula (2): general formula [Liₓ(Ni_{y}M³_{z}Mn_{3-x-y-z})O_{4-δ}]. The element M³ in the formula (2) is preferably one element, or a combination of two or more elements, selected from the group consisting of Na, Mg, Al, P, K, Ca, Ti, V, Cr, Fe, Co, Cu, Ga, Y, Zr, Nb, Mo, In, Ta, W, Re, and Ce.

It is preferable that, in the formula (1), "x" is from 1.00 to 1.20, "y" is from 0.20 to 1.20, and "z" is from 0.001 to 0.400. It is preferable that, in the formula (2), "x" is from 1.00 to 1.20, "y" is from 0.20 to 0.70, and "z" is greater than 0 and 0.5 or less. Furthermore, "4-δ" indicates that an oxygen vacancy may be included, and δ is preferably from 0 to 0.2.

It is also preferable that the core portion is constituted by particles made of a lithium-nickel metal complex oxide having a layered structure containing Li, an element M⁴, and O, where the element M⁴ is one element, or a combination of two or more elements, selected from the group consisting of Ni, Co, Mn, and Al, or the element M⁴ includes one element, or a combination of two or more elements, selected from the group consisting of Ni, Co, Mn, and Al as well as one element, or two or more elements, selected from the group consisting of transition metal elements that are present between the group 3 elements and the group 11 elements on the periodic table and typical metal elements in periods 1 to 3 on the periodic table. Hereinafter, this core portion will also be referred to as the "core portion B". The active material of the present invention may also contain another component in addition to the core portion B. However, from the viewpoint of enabling the properties of the core portion B to be effectively exhibited, it is preferable that the core portion B accounts for at 80 mass% or greater, more preferably 90 mass% or greater, and even more preferably 95 mass% or greater (including 100 mass%), of the active material of the present invention.

The core portion B is preferably constituted by particles made of a lithium metal complex oxide having a layered structure represented by the general formula (3): Li₁₊ₓM⁴₁₋ₓO₂. In the formula (3), "1+x" is preferably from 0.95 to 1.09.

Note that further descriptions of the core portion A and the core portion B can be the same as those described in, for example, WO 2017/150504 and Japanese Patent No. 6626434, and are therefore omitted here.

The cumulative volume particle size D₅₀ at 50 vol% cumulative volume of the active material of the present invention as measured using a laser diffraction scattering particle size distribution measurement method is, for example, preferably 0.5 µm or greater, more preferably 1.0 µm or greater, even more preferably 2.0 µm or greater, and yet even more preferably 2.5 µm or greater. On the other hand, the D₅₀ is, for example, preferably 15.0 µm or less, more preferably 10.0 µm or less, and even more preferably 8.0 µm or less. With the D₅₀ being set within the above-described range, resistance when Li diffuses into secondary particles can be reduced, and consequently, the end-of-discharge characteristics can be improved.

Next, a preferred method for producing the active material of the present invention will be described by taking the production of an active material that has a coating portion containing a LiAO compound as an example.

The active material of the present invention is divided roughly into a preparing step of preparing a dispersion liquid in which a powder constituting the core portion is dispersed in a liquid containing water, and a mixing step of mixing an aqueous solution containing lithium (Li) element and an element A with the dispersion liquid.

In the preparing step, a powder constituting the core portion, the powder being prepared according to a known method, is dispersed in a liquid containing water.

In the mixing step, the dispersion liquid prepared in the preparing step is mixed with an aqueous solution in which a lithium raw material and an element A raw material are dissolved in a solvent, to generate a coating portion containing a LiAO compound on the surface of the core portion.

However, this production method is merely a preferred example, and the method for producing the active material of the present invention is not limited to this production method. For example, it is also possible to produce the active material of the present invention using a tumbling fluidized bed coating method (sol-gel method), a mechanofusion method, a CVD method, a PVD method, and the like, by appropriately adjusting the conditions.

During the production of the active material of the present invention, it is desirable that, prior to the formation of the coating portion on the surface of the core portion, the powder constituting the core portion is subjected to disintegration processing to make particles constituting the core portion monodispersed as much as possible. In other words, it is preferable that the preparing step is a step in which the liquid containing water and aggregates constituting the core portion are mixed, and the resulting mixture is disintegrated, to thereby obtain the dispersion liquid in which the powder constituting the core portion is dispersed.

The disintegration processing refers to an operation for loosening aggregated particles, that is, secondary particles into primary particles, with no or minimal change in the particle size of the particles. By forming the coating portion on the surface of the monodispersed particles constituting the core portion, it is possible to form the coating portion on the entire surface of each particle. In the thus obtained active material, locations where the core portion is exposed on the surface are minimized.

For example, a disintegrator equipped with an impeller (turbine) can be used to disintegrate the powder constituting the core portion. In this type of disintegrator, aggregated particles are loosened into primary particles by applying a rotational force (centrifugal force) and also using a shearing force generated by a swirling flow. It is desirable to avoid using media mills such as ball mills and bead mills in this production method, because, in the media mills, disintegration and pulverization (reduction in particle size) occur at the same time.

The disintegration processing is preferably performed in a state in which the powder constituting the core portion is dispersed in a liquid containing water, that is, an aqueous liquid. Water itself, a mixed liquid of water and an aqueous organic solvent, or the like can be used as the aqueous liquid. In particular, it is preferable to disperse the powder constituting the core portion in water itself. This changes the surface state of the core portion, and a coating portion having a desired structure, or in other words, a coating portion in which two or more inflection points are observed in a first-order derivative of an average intensity profile attributed to the element A can thus be successfully formed in the subsequent step of forming the coating portion. The reason for this is not entirely clear, but the inventors of the present invention presume that this may be because, due to the change in the surface state of the core portion caused by water, the LiAO compound instantaneously forms on the surface of the core portion, and then, the LiAO compound forms again after a while.

Next, in the mixing step, the surface of the disintegrated particles constituting the core portion is coated with the LiAO compound. In order to coat the surface with the LiAO compound, for example, an aqueous solution in which a lithium raw material and an element A raw material are dissolved in a solvent is prepared, and the powder constituting the core portion dispersed in the aqueous liquid can be added to this aqueous solution. In this manner, the LiAO compound can be generated on the surface of the core portion.

As the element A raw material, for example, a hydroxide of the element A can be used. As the lithium raw material, for example, lithium hydroxide can be used. Depending on the type of the element A raw material, the solubility thereof in water may be insufficient, and in that case, an acid or alkali may be added to promote the dissolution of the element A raw material in water.

When the element A raw material and the lithium raw material are dissolved in water to prepare an aqueous solution, the solution may be heated to promote the dissolution of these compounds and to promote the formation of the LiAO compound. The heating temperature is, for example, preferably 80°C or higher and 100°C or lower.

As a result of mixing the aqueous solution and the aqueous dispersion liquid containing the powder constituting the core portion, the LiAO compound forms on the surface of the core portion. After that, steps such as filtration, solvent substitution, and the like are performed, and the solid is dried. Thus, particles of a desired active material are obtained.

The active material of the present invention can be used, for example, in the form of an electrode material mixture containing the active material and a solid electrolyte. The active material of the present invention can be suitably used as a positive electrode active material for a battery, in particular, a solid-state battery, and especially a solid-state lithium battery or the like. The above-described battery may be a primary battery or a secondary battery, but it is particularly preferable that the battery is a secondary battery, in particular, a solid-state lithium secondary battery. For example, the active material of the present invention can be suitably used as a positive electrode active material in a solid-state battery containing a sulfide solid electrolyte as the solid electrolyte. Examples of the shape of the battery include the shapes of laminate-type, cylindrical, and rectangular batteries.

The solid-state battery has a positive electrode layer, a negative electrode layer, and a solid electrolyte layer located between the positive electrode layer and the negative electrode layer, and the positive electrode layer contains the above-described active material of the present invention. The solid-state battery can be produced by, for example, press-forming the positive electrode layer, the solid electrolyte layer, and the negative electrode layer stacked in this order. The term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

According to the present invention, the formation of a high-resistance layer at a contact portion between the active material and the solid electrolyte can be suppressed. The "contact portion between the active material and the solid electrolyte" means either (a) an interface between the active material and the solid electrolyte in an electrode material mixture or (b) an interface between the active material in an electrode material mixture and the solid electrolyte in the solid electrolyte layer.

The solid electrolyte used in the present invention may be the same as a solid electrolyte used in ordinary solid-state batteries. Examples of the solid electrolyte that may be used in the present invention include a sulfide solid electrolyte, an oxide solid electrolyte, a nitride solid electrolyte, and a halide solid electrolyte. Of these solid electrolytes, a sulfide solid electrolyte is preferable. The sulfide solid electrolyte may be, for example, a sulfide solid electrolyte containing lithium (Li) element and sulfur (S) element and having lithium ion conductivity, or a sulfide solid electrolyte containing lithium (Li) element, phosphorus (P) element, and sulfur (S) element and having lithium ion conductivity. The sulfide solid electrolyte may be any of crystalline material, glass ceramic, and glass. The sulfide solid electrolyte may have a crystal phase with an argyrodite-type structure. Examples of such sulfide solid electrolyte include compounds represented by Li₂S-P₂S₅, Li₂S-P₂S₅-LiX, where "X" represents one or more halogen elements, Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, LiₐPS_{b}X_{c}, where X represents at least one halogen element, a represents a number from 3.0 to 6.0, b represents a number from 3.5 to 4.8, and c represents a number from 0.1 to 3.0. In addition, sulfide solid electrolytes disclosed in WO 2013/099834 and WO 2015/001818, for example, may also be used.

The active material contained in the electrode material mixture may be the active material of the present invention alone, or may be a combination of the active material of the present invention with another active material. An example of the other active material is particles made of a known lithium metal complex oxide described above. The particles may or may not have any coating portion. When the active material of the present invention and the other active material are used in combination, it is preferable that the active material of the present invention is contained in an amount of preferably 50 mass% or greater, and more preferably 70mass% or greater, relative to the total active material.

When a sulfide solid electrolyte is contained in an electrode material mixture, the ratio of the sulfide solid electrolyte in the electrode material mixture is typically from 5 to 50 mass%. The electrode mixture may also contain other materials such as a conductivity aid and a binder when necessary. An electrode layer such as a positive electrode layer can be formed by mixing the electrode material mixture and a solvent to prepare a paste, applying the paste onto a current collector such as aluminum foil, and drying the applied paste. Alternatively, in the case of a pressed-powder battery instead of a coated battery, an electrode layer can be formed by performing solid-phase mixing of the materials of the active material, the solid electrolyte, and a conductivity aid, and pelletizing the mixture.

A negative electrode active material used in the negative electrode layer may be the same as a negative electrode active material used in ordinary solid-state batteries. As specific examples of the negative electrode active material, materials that absorb and release lithium ions, for example, known materials including carbon materials, silicones, silicon oxide-based compounds such as Si-O, tin-based compounds, lithium titanate, and the like can be used. Examples of the carbon materials include: those obtained by sintering organic high molecular compounds such as polyacrylonitrile, a phenolic resin, a phenol novolac resin, and cellulose; as well as artificial graphite and natural graphite. The negative electrode layer can be produced in the same manner as the production of the positive electrode layer, except that such a negative electrode active material is used.

### Examples

Hereinafter, the present invention will be described in further detail based on examples. However, the scope of the present invention is not limited to the examples given below. Unless otherwise specified, "%" means "mass%".

### Example 1

### (1) Preparing Step

Pure water and aggregates constituting the core portion were mixed to obtain a mixed liquid. This mixed liquid was subjected to disintegration processing using a FILMIX (registered trademark) disintegrator manufactured by PRIMIX Corporation, to obtain a dispersion liquid in which a powder constituting the core portion was dispersed. After the disintegration processing, water in the dispersion liquid was partially removed by filtration to adjust the concentration of the core portion to 77%. The D₅₀ of the core portion after the disintegration processing was 4.2 µm. Note that the core portion was made of a spinel-type lithium-transition metal complex oxide (hereinafter also referred to as "LNMO") having a composition of Li: 4.2%, Mn: 43.3%, and Ni: 15.7%.

### (2) Mixing Step

An aqueous solution of lithium hydroxide was heated to 90°C or higher, and niobium hydroxide and a hydrogen peroxide solution were added thereto to prepare an aqueous solution containing lithium and niobium. The concentration of lithium in the aqueous solution was 0.5 mol%, and the concentration of niobium was 0.06 mol%.

While the resulting aqueous solution was kept at 90°C or higher, the dispersion liquid prepared in the preparing step was added to the aqueous solution, followed by mixing. As a result of the mixing, the coating portion containing an oxide containing lithium and niobium was generated on the surface of the core portion.

Next, water was removed by decantation, further washing with a lithium sulfate solution was performed twice, and then drying was performed at 120°C. Thus, a desired active material was obtained.

Elemental analysis showed that the ratio of niobium in the active material was 2.4%. The thickness of the coating portion as measured using a scanning transmission electron microscope was about 30 to 50 nm.

### Comparative Example 1

An active material was obtained in the same manner as in Example 1, except that the preparing step was not performed and the mixing step was performed using aggregates constituting the core portion, instead of a dispersion liquid.

Elemental analysis showed that the ratio of niobium in the active material was 2.2%.

### Evaluation 1

For each of the active materials obtained in the example and the comparative example, average intensity profiles of Mn and Nb in the coating portion were measured using an energy dispersive X-ray spectrometer. The results of the measurement and first-order derivatives are shown in Figs. 2(a), 2(b), 3(a), and 3(b).

The conditions for the measurement using the energy dispersive X-ray spectrometer were as follows.

The active material powder to be measured was embedded in a resin to prepare a thin specimen that was observable by TEM using a focused ion beam. The thickness of a thin specimen to be prepared should be 150 nm or less, or preferably 100 nm or less, so that the presence of a core portion and a coating portion can be clearly determined. If the active material is contained in a solid-state battery, it is also possible to dismantle the solid-state battery in a glove box to take out a positive electrode layer, then pulverize the positive electrode layer in a mortar, and embed the pulverized powder in a resin.

The thin specimen was observed using a scanning transmission electron microscope (STEM) attached to the energy dispersive X-ray spectrometer (EDS), to observe the vicinity of the surface of the active material, and elemental mapping data of a region including the coating portion was acquired by the EDS. From the obtained elemental mapping data, average intensity profiles of Mn, which was a component of the active material, and Nb, which was a component of the coating portion, were extracted. Apparatuses used in this measurement are as follows.
STEM: JEM-ARM200F (manufactured by JEOL Ltd.)
EDS: JED-2300T with Dry SD100GV (manufactured by JEOL Ltd.)
EDS analysis software: NSS Ver. 4.1 (manufactured by Thermo Fisher Scientific)

### • Method for observing the vicinity of the surface of the active material

A plane that was horizontal to the region from which the average intensity profiles were to be obtained and that was flat in the depth direction was selected as an observation plane and observed.

### • Conditions for acquiring elemental mapping data

Acceleration voltage: 200 kV, Magnification: 2,000,000 times, STEM image acquiring detector: ADF

STEM image acquisition resolution: 512 × 512 pixels, EDS mapping resolution: 256 × 256 pixels (The magnification and the measurement time were adjusted as appropriate so that mapping data of Nb element in the coating portion was able to be acquired.)

### • Details of the average intensity profiles acquired

From a region of the obtained elemental mapping data, the region being about 50 nm wide horizontally to a flat active material surface and including the active material and the entire coating layer in the vertical direction (about 70 to 90 nm), line profiles (for 100 points) of the net intensity excluding the background were extracted for Nb and Mn.

### • Method for obtaining the first-order derivatives

The average intensity profiles were numerically differentiated using a piece of mathematical calculation software (Igor Pro 8 (manufactured by HULINKS Inc.)) to obtain first-order derivatives. When obtaining the first-order derivatives, if the line profiles contained many noise components, a moving average of a total of five points, including two points both before and after the point of interest, was calculated, from which noise components were removed using an FIR filter of a filter function on an analysis tab of the software, and after that, the first-order derivatives were obtained.

With respect to the FIR filter, the "Low Pass" section in a settings window of the software was set as follows.
- End of Pass Band: 0
- Start of Reject Band: 0.3
- Number of Coefficients: 99
- Window: Hamming

### Evaluation 2

Positive electrode material mixtures were prepared according to the following procedure using the active materials obtained in the example and the comparative example, and lithium ion solid-state batteries containing the respective positive electrode material mixtures were produced according to the following procedure. For each of the produced solid-state batteries, the reaction resistance and the discharge rate characteristics were measured using methods that are described below. Table 1 below shows the results.

### Preparation of Positive Electrode Material Mixture

A positive electrode material mixture was prepared by mixing the active material obtained in the example or the comparative example, a sulfide solid electrolyte (argyrodite-type solid electrolyte), and VGCF (registered trademark) serving as a conductivity aid in a mass ratio of 60:30:10. A positive electrode was produced using this positive electrode material mixture.

### Production of Solid-State Battery

Graphite was used as a negative electrode active material. A negative electrode material mixture was prepared by mixing graphite and a sulfide solid electrolyte (argyrodite-type solid electrolyte) in a mass ratio of 50:50. A negative electrode was produced using this negative electrode material mixture.

The positive electrode, a sulfide solid electrolyte (argyrodite-type solid electrolyte), and the negative electrode were stacked in this order and press-formed to produce a solid-state battery. The produced solid-state battery was subjected to constant-current charging at 0.1 C to 5.0 V and, after the voltage reached 5.0 V, subjected to constant-voltage charging at 5.0 V, with the end point being at the point in time when the current value reached 0.01 C (this charging condition is referred to as "5.0 V CCCV charging"). Then, constant-current discharging at 0.1 C was performed to 3.0 V. This charging and discharging cycle was performed three times.

### Measurement of Interfacial Resistance

The solid-state battery produced above was charged to 50% of the battery capacity to provide the solid-state battery having an SOC of 50%. After that, AC impedance measurement was performed. An interfacial resistance value (Ω) was calculated from the intersection with the horizontal axis of a Cole-Cole plot, which was a complex impedance plane plot of the measurement results. Table 1 shows the interfacial resistance of the example as an index when the interfacial resistance value of the comparative example is taken as 100.

The specifications, conditions, and the like of an apparatus used in the measurement were as follows.
- Measurement apparatus: SOLARTRON 1255B FREQUENCY RESPONSE ANALYZER available from TOYO Corporation
- AC Amplitude: 10 mV
- Frequency domain: 1.0 × 10⁶ to 1.0 × 10¹ Hz

### Measurement of Discharge Rate Characteristics

For the solid-state batteries produced above, the 5.0 V CCCV charging was performed, which was followed by constant-current discharging at 0.1 C to 3.0 V, and the discharge amount in this case was designated as "A". Subsequently, the 5.0 V CCCV charging was performed, which was followed by constant-current discharging at 8.0 C to 3.0 V, and the discharge amount in this case was designated as "B".

Then, (B/A) × 100 was calculated, and the obtained value was used as the discharge rate characteristics at 8.0 C. Table 1 shows the discharge rate characteristics of the example as an index when the discharge rate characteristics of the comparative example are taken as 100.

**Table 1**

| | **Ex. 1** | **Com. Ex. 1** |
|---|---|---|
| Inflection point P1 (nm) | 1 | 11 |
| Inflection point P2 (nm) | 30 | - |
| Interfacial resistance | 55 | 100 |
| Discharge rate characteristics | 136 | 100 |

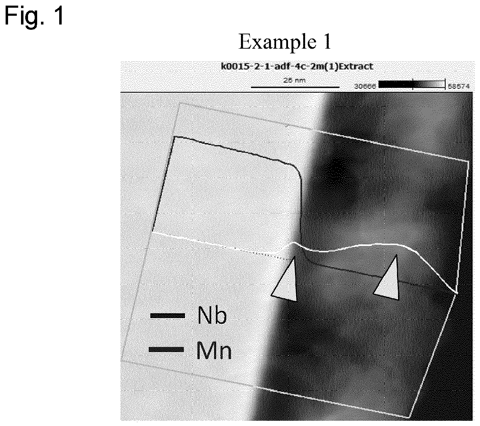

As is clear from the results shown in Figs. 1 to 3(b), in the active material obtained in Example 1, two inflection points are observed in the first-order derivative of the average intensity profile of Nb in the coating portion. The distances from the origin P0 to the individual inflection points are shown in Table 1. In contrast, in the active material obtained in Comparative Example 1, only one inflection point is observed in the first-order derivative of the average intensity profile of Nb in the coating portion.

As is clear from the results shown in Table 1, it is found that the solid-state battery containing the active material of Example 1 has lower reaction resistance than the solid-state battery containing the active material of Comparative Example 1, and therefore has good discharge rate characteristics.

### Industrial Applicability

As has been described in detail above, according to the present invention, an active material with which good battery performance can be obtained is provided.

## Claims

1. An active material comprising:
a core portion made of an active material base material; and
a coating portion located on a surface of the core portion,
wherein the coating portion contains an element A comprising at least one selected from the group consisting of titanium (Ti), zirconium (Zr), tantalum (Ta), niobium (Nb), and aluminum (Al), and
the active material has two or more inflection points in a first-order derivative obtained with respect to a peak attributed to the element A, the first-order derivative being obtained based on a constituent element average intensity profile measured for the coating portion with use of an energy dispersive X-ray spectrometer.

2. The active material according to claim 1,
wherein, when an interface between the core portion and the coating portion is defined as an origin, and at least inflection points P1 and P2 are present as the inflection points in an order from the origin in a thickness direction of the coating portion,
the inflection point P1 is observed within 10 nm from the origin in the thickness direction of the coating portion.

3. The active material according to claim 1 or 2,
wherein the coating portion contains lithium (Li) element, the element A, and oxygen (O) element.

4. A method for producing an active material having: a core portion made of an active material base material; and a coating portion located on a surface of the core portion,
the method comprising:
a preparing step of preparing a dispersion liquid in which a powder constituting the core portion is dispersed in a liquid containing water; and
a mixing step of mixing an aqueous solution containing lithium (Li) element and an element A with the dispersion liquid, the element A comprising at least one selected from the group consisting of titanium (Ti), zirconium (Zr), tantalum (Ta), niobium (Nb), and aluminum (Al).

5. The method for producing an active material according to claim 4,
wherein the preparing step is a step in which the liquid containing water and aggregates constituting the core portion are mixed, and a resulting mixture is disintegrated, to thereby obtain the dispersion liquid in which the powder constituting the core portion is dispersed.

6. An electrode material mixture comprising the active material according to any one of claims 1 to 3 and a solid electrolyte.

7. A battery comprising: a positive electrode layer; a negative electrode layer; and a solid electrolyte layer located between the positive electrode layer and the negative electrode layer,
wherein the positive electrode layer contains the active material according to any one of claims 1 to 3.
